# EUROPÄISCHE PATENTSCHRIFT

(11) **EP 1 222 984 B1**
(45) Veröffentlichungstag und Bekanntmachung des Hinweises auf die Patenterteilung: **29.08.2007**
(21) Anmeldenummer: 01128502.0
(22) Anmeldetag: 29.11.2001
(51) Int. Cl.: B23B 31/02

(54) **Spannfutter zum Spannen von Werkzeugen durch Schrumpfsitz**
Clamping chuck for clamping tools by shrink fit
Mandrin de serrage destiné au serrage d'outils par blocage par retrait

(30) Priorität: 10.01.2001 DE 10100719
(43) Veröffentlichungstag der Anmeldung: 17.07.2002
(73) Patentinhaber: Bilz Werkzeugfabrik GmbH & Co. KG, 73760 Ostfildern (DE)
(72) Erfinder: Voss, Michael, 71220 Leonberg (DE)
(74) Vertreter: Kratzsch, Volkhard

(56) Entgegenhaltungen:
- US-A- 5 311 654

## Beschreibung

Die Erfindung bezieht sich auf ein Spannfutter zum Spannen von Werkzeugen durch Schrumpfsitz der im Oberbegriff des Anspruchs 1 genannten Art.

Aus der WO-A-02/051571, die nach Art. 54 (3) und (4) EPÜ und nur in dem Umfang zu berücksichtigen ist, der durch das Prioritätsdokument DE-A-1 0065383 A1 abgedeckt ist, ist ein Spannfutter der eingangs genannten Art bekannt. Bei diesem sind die Segmente nicht Teil eines in den Hülsenteil des Futterkörpers eingesetzten Einsatzes, bei dem sämtliche radialen Schlitze zwischen den Segmenten des Einsatzes zu beiden Radialrichtungen offen sind.

Ferner ist ein Spannfutter bekannt (US-A 53 11 654), bei dem der Futterkörper einen Längenabschnitt mit einer zentralen Aufnahme mit Spannfläche zum Einstecken und Aufnehmen des zu spannenden Werkzeuges mit dessen zylindrischen Schaft aufweist. Die Aufnahme besteht aus einer zentralen, axial relativ lang bemessenen Bohrung, die mit einem Zentralkanal im restlichen Teil des Futterkörpers in Verbindung steht, wobei diese Bohrung zugleich auch zur Hindurchleitung eines Schmier- und/oder Kühlmittels dienen soll. Zu diesem Zweck sind im Bereich der zentralen Bohrung mehrere in Umfangsrichtung in gleichen Winkelabständen voneinander angeordnete Längsnuten geringer Tiefe eingebracht, durch die das Schmier- und/oder Kühlmittel entlang dem Schaft des eingespannten Werkzeuges nach vorn bis zum frei herauskragenden Werkzeugteil geführt wird. Bei diesem Schrumpffutter wird zum Einleiten der Schrumpfbefestigung der die zentrale Bohrung enthaltende Längenabschnitt von außen her erwärmt, so dass er sich unter Erwärmung radial ausdehnt mit einhergehender radialer Aufweitung der zentralen Bohrung, die die Spannfläche bildet. Aufgrund des relativ großen Materialquerschnitts des Längenabschnitts hat dieser nur eine relativ geringe Dehnrate. Das Ausmaß der radialen Aufweitung der zentralen Bohrung ist relativ klein. Dies bedingt, dass die Schäfte der auf diese Weise zu spannenden Werkzeuge sehr exakt bearbeitet und bemessen sein müssen, in Anpassung an das Aufweitvermögen der zentralen Spannbohrung des Spannfutters. Die Toleranzen für die Durchmesser der Werkzeuge sind deswegen sehr eng. Je nach Gegebenheiten ist für das Erreichen der entsprechend ausreichenden Aufweitung die Einwirkzeit der Wärme und/oder die Wärmemenge beim Erwärmen des Längenabschnitts des Spannfutters relativ groß. Anschließend an die Erwärmung und Einbringung des Werkzeuges ergibt sich bei anschließender Abkühlung eine Schrumpfung des Längenabschnitts des Futterkörpers mit einhergehender radialer Verengung und Spannung des zylindrischen Schaftes des Werkzeuges im Bereich der zentralen Bohrung.

Der Erfindung liegt die Aufgabe zugrunde, ein Spannfutter der eingangs genannten Art zu schaffen, das eine erhöhte Dehnrate mit einhergehender größerer Aufweitung des Spanndurchmessers aufweist, wodurch die Toleranzen für den Schaft der zu spannenden Werkzeuge größer sein können.

Die Aufgabe ist bei einem Spannfutter der eingangs genannten Art gemäß der Erfindung durch die Merkmale im Anspruch 1 gelöst. Weitere besondere Erfindungsmerkmale und Ausgestaltungen dazu ergeben sich aus den Unteransprüchen. Durch die erfindungsgemäße Gestaltung ist es bei der Erwärmung möglich, dass der die zentrale Aufnahme enthaltende Längenabschnitt sich mit erhöhter Dehnrate stärker aufweitet und der wirksame Durchmesser für die Dehnung größer ist. Es ergibt sich eine größere Aufweitung des Spanndurchmessers. Dies hat den Vorteil, dass die Schafttoleranz für die zu spannenden Werkzeuge größer sein kann. Je nach Gegebenheiten können auch die Einwirkzeit und/oder Wärmemenge, die für die Erwärmung des Längenabschnitts des Spannfutters nötig sind, verringert werden. Bei allem ist das Spannfutter einfach und kostengünstig.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische perspektivische Ansicht eines Spannfutters ohne eingesetztes Werkzeug gemäß einem ersten Ausführungsbeispiel,
- Fig. 2: einen schematischen Schnitt des Spannfutters entlang der Linie II-II in Fig. 1, mit eingesetztem Werkzeug,
- Fig. 3: einen schematischen axialen Längsschnitt eines Spannfutters gemäß einem zweiten Ausführungsbeispiel,
- Fig. 4: einen schematischen Schnitt entlang der Linie IV-IV des Spannfutters in Fig. 3 mit eingesetztem Werkzeug.

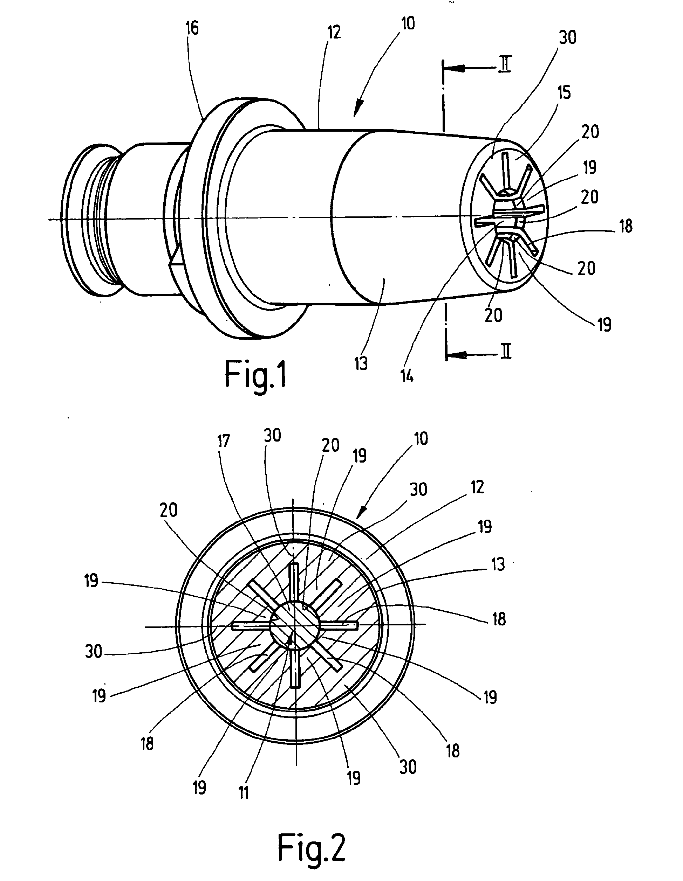

In den Zeichnungen ist ein Spannfutter 10 zum Spannen von Werkzeugen 11 durch Schrumpfsitz schematisch dargestellt, von denen nur der im Spannfutter 10 gespannte Schaft 17 sichtbar ist. Das Spannfutter 10 weist einen Futterkörper 12 auf, der einen Längenabschnitt 13 mit einer zentralen Aufnahme 14 hat, die in Fig. 1 zum dort rechts befindlichen Ende hin offen ist und zum Einstecken und Aufnehmen des zu spannenden Werkzeuges 11 mit seinem Schaft 17 dient. Der Futterkörper 12 weist anschließend an den Längenabschnitt 13 einen Endbereich 16 auf, der für die Erfindung nicht weiter bedeutsam ist und beliebig gestaltet sein kann. Mit diesem Endbereich 16 ist das Spannfutter 10 in bekannter Weise z. B. in eine Arbeitsspindel einer Werkzeugmaschine einsetzbar. Der Endbereich 16 kann abweichend von der Darstellung auch anders gestaltet sein, je nach den spindelseitig vorhandenen Gegebenheiten. Er kann z. B. auch als einfacher Schaft gestaltet sein, der Teil eines Spannfutters ist oder mit dem Futterkörper 12 seinerseits in ein Spannfutter lösbar einsetzbar ist, das in der Arbeitsspindel einer Werkzeugmaschine aufnehmbar ist.

Die bis zu einer planen Anlagefläche 15 reichende innere Aufnahme 14 dient zum Einstecken und Aufnehmen des im Futterkörper 12 zu spannenden Werkzeuges 11 mit dessen zylindrischem Schaft 17. Das Werkzeug 11 ist prinzipiell beliebig. Es besteht z. B. aus einem Fräser oder Bohrer od. dgl..

Beim ersten Ausführungsbeispiel in Fig. 1 und 2 stellt der Futterkörper 12 ein einstückiges Gebilde dar. In besonderer Gestaltung weist der Längenabschnitt 13 mehrere in Umfangsrichtung in Abständen voneinander angeordnete und durch Freiräume 18 dazwischen voneinander getrennte Segmente 19 auf. Beim gezeigten Ausführungsbeispiel sind insgesamt 8 gleichartige Segmente 19 und dazwischen vorhandene Freiräume 18 vorgesehen. Die Segmente 19 verlaufen im wesentlichen achsparallel und erstrecken sich dabei über eine wesentliche axiale Länge der Aufnahme 14 derart, dass diese die Aufnahme 14 und mit ihren jeweiligen inneren Umfangsflächen 20 die Spannfläche zum Spannen des Schaftes 17 bilden.

Die Freiräume 18 sind in Radialrichtung zum Inneren der Aufnahme 14 hin offen und weisen in radialer Richtung eine wesentliche Tiefe auf. Sie erstrecken sich in Radialrichtung von innen nach außen gesehen um ein wesentliches Maß nach außen. Die Freiräume 18 sind durch radiale Schlitze gebildet, deren in Umfangsrichtung gemessene Breite beim ersten Ausführungsbeispiel in Fig. 1 und 2 in Radialrichtung gleichbleibend ist. Demgemäß weisen die einzelnen Segmente 19 im Querschnitt die Form von Kreisringsegmenten auf. Die Anordnung ist so getroffen, dass die Segmente 19 und/oder die Freiräume 18 in Umfangsrichtung in etwa gleichen Umfangswinkelabständen aufeinanderfolgen.

Der Längenabschnitt 13 weist einen Hülsenteil 30 auf, der die Segmente 19 in radialer Richtung gesehen außen umringt. Dieser Hülsenteil 30 weist einen vergleichsweise dünn bemessenen Wandungsquerschnitt auf, der eine hohe Wärmedehnrate hat. Beim ersten Ausführungsbeispiel in Fig. 1 und 2 ist dieser Hülsenteil 30 mit den Segmenten 19 einstückig und somit auch materialeinheitlich.

Durch die erfindungsgemäße Gestaltung des Spannfutters ergibt sich, dass bei Erwärmung zur Einleitung der Schrumpfbefestigung des Werkzeuges 11 der Hülsenteil 30 sich stärker radial aufweitet als dies bei bekannten vergleichbaren Spannfuttern ohne Segmente 19 und Freiräume 18 der Fall ist. Der wirksame Durchmesser für die Dehnung ist größer. Es ergibt sich in vorteilhafter Weise eine größere Aufweitung des Spanndurchmessers der Aufnahme 14, wodurch die Toleranz der Schäfte 17 der zu spannenden Werkzeuge 11 größer sein kann. Für die erreichte hohe Wärmedehnrate maßgeblich ist der vergleichsweise dünn bemessene Wandungsquerschnitt des Hülsenteils 30, der durch relativ große radiale Tiefe der Freiräume 8 und Aufteilung in einzelne Segmente 19 durch Freiräume 18 dazwischen erreicht wird, so dass der Hülsenteil 30 theoretisch einen relativ schmalen Ring ergibt, der sich um die Segmente 19 in Umfangsrichtung herum, damit einstückig, erstreckt, wobei bei der Einleitung der Schrumpfbefestigung zunächst durch Erwärmen im wesentlichen nur dieser Hülsenteil 30 eine radiale Aufweitung durch Dehnung erfährt und dadurch der Durchmesser der Aufnahme 14 und der von den inneren Umfangsflächen 20 gebildete Spanndurchmesser vergrößert wird. Dabei fließt relativ wenig Wärme zusätzlich ab in die Segmente 19 und von diesen zum Werkzeugschaft 17, so dass je nach Gegebenheiten die Zeit für die Erwärmung des Längenabschnitts 13 und/oder die einzubringende Wärmemenge reduziert werden kann.

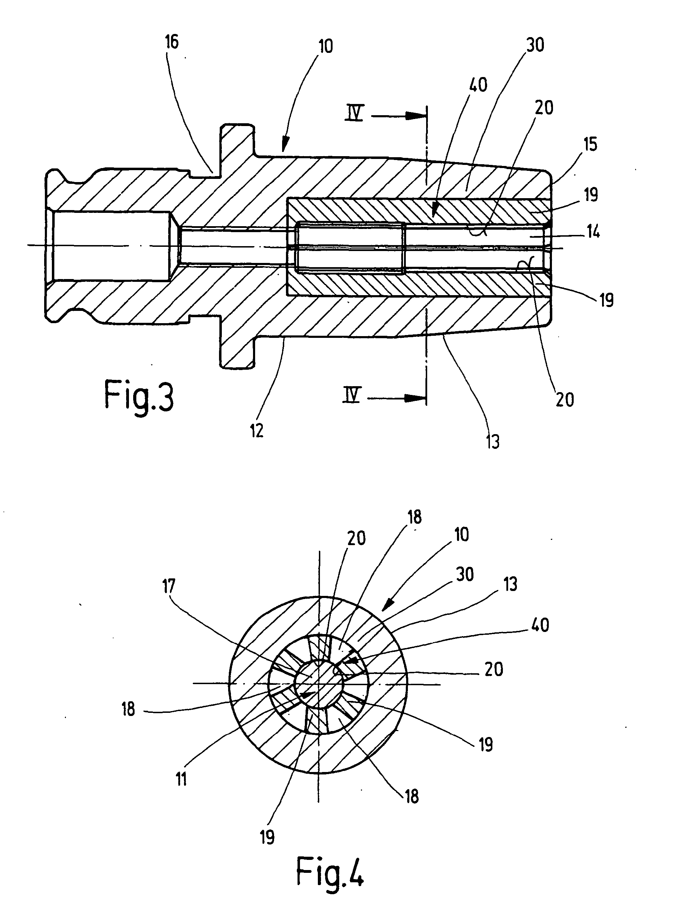

Bei dem in Fig. 3 und 4 gezeigten zweiten Ausführungsbeispiel sind für die Teile, die dem ersten Ausführungsbeispiel entsprechen, die gleichen Bezugszahlen verwendet, so dass dadurch zur Vermeidung von Wiederholungen auf die Beschreibung des ersten Ausführungsbeispieles Bezug genommen ist.

Anders als beim ersten Ausführungsbeispiel ist das Spannfutter 10 gemäß Fig. 3 und 4 so gestaltet, dass die einzelnen Freiräume 18 zwischen den Segmenten 19 eine wesentliche Breite, in Umfangsrichtung gemessen, aufweisen, wobei die Freiräume 18 zwar auch radiale Schlitze sind, diese Schlitze sich jedoch in Radialrichtung von innen nach außen betrachtet vergrößern. Die einzelnen Segmente 19 weisen im Querschnitt die Form von radial ausgerichteten Quadern auf.

Die Segmente 19 sind beim zweiten Ausführungsbeispiel Teil eines besonderen Einsatzes 40, der in den Längenabschnitt 13 des Futterkörpers 12 vom in Fig. 3 rechts befindlichen Ende her eingesetzt ist. Der die Segmente 19 umringende Hülsenteil 30 ist einstückiger Teil des Längenabschnitts 13, während demgegenüber die Segmente 19 als Bestandteile des Einsatzes 40 eigenständige Bauteile darstellen. Der Einsatz 40 kann in vorteilhafter Weise aus einem anderen Material bestehen als der Hülsenteil 30 und damit der Längenabschnitt 13 des Futterkörpers 12. Von Vorteil ist es z. B., wenn der Einsatz 40 aus einem Material mit geringerer thermischer Leitfähigkeit als der Hülsenteil 30 gebildet ist. Dies hat den Vorteil, dass bei der Erwärmung für die Einleitung der Schrumpfbefestigung die Wärme möglichst nur im Hülsenteil 30 verbleibt und nicht etwa durch Wärmeleitung in die Segmente 19 abfließt und von diesen zum Schaft 17 des Werkzeuges 11 abfließt. Von Vorteil kann es ferner sein, wenn der Einsatz 40 aus einem Material mit geringem Wärmeausdehnungskoeffizienten gebildet ist. Dies hat den Vorteil, dass bei der Erwärmung des Hülsenteils 30 dessen hohe Wärmedehnrate voll genutzt wird und im inneren Bereich, der vom Einsatz 40 gebildet wird, nur noch eine geringe Wärmeausdehnung geschieht. Wie ersichtlich ist, sind beim zweiten Ausführungsbeispiel die Freiräume 18 zwischen den Segmenten 19 des Einsatzes 40 in Radialrichtung sowohl nach außen als auch nach innen zur Aufnahme 14 hin offen. Der Einsatz 40 ist mit Vorzug fest mit dem Hülsenteil 30 verbunden, z. B. durch Löten. Wie sich aus Fig. 3 ergibt, erstrecken sich die Segmente 19 und die an deren inneren Umfangsflächen 20 gebildeten Spannflächen über eine wesentliche axiale Länge, so dass auch längere Schäfte 17, soweit dies erforderlich ist, zuverlässig durch Schrumpfbefestigung gespannt werden können. Bei beiden Ausführungsformen des Spannfutters 10 erfolgt die Schrumpfbefestigung eines Werkzeuges 11 dadurch, dass zunächst das Spannfutter 10 umfangsseitig im Bereich des Längenabschnitts 13 erwärmt wird, wobei das Werkzeug 11 mit dem Schaft 17 in die Aufnahme 14 eingebracht wird, da sich aufgrund der Erwärmung der für das Spannen wirksame Durchmesser durch die große Wärmedehnrate des Hülsenteils 30 mit relativ großer Aufweitung des Spanndurchmessers erweitert, so dass Werkzeuge 11 mit größeren Toleranzen hinsichtlich des Durchmessers des Schaftes 17 gespannt werden können. Anschließend wird der für das Spannen maßgebliche Teil des Längenabschnitts 13 abgekühlt mit einhergehender Schrumpfung unter radialem Spannen des Schaftes 17 innerhalb der Aufnahme 14.

## Patentansprüche

1. Spannfutter zum Spannen von Werkzeugen durch Schrumpfsitz, mit einem Futterkörper (12), der einen Längenabschnitt (13) mit einer zentralen Aufnahme (14) mit Spannfläche zum Einstecken und Aufnehmen des zu spannenden Werkzeuges (11) mit dessen Schaft (17) aufweist,
wobei der Längenabschnitt (13) mehrere in Umfangsrichtung in Abständen voneinander angeordnete und durch Freiräume (18) dazwischen voneinander getrennte Segmente (19) aufweist, die im wesentlichen achsparallel verlaufen und mit ihren inneren Umfangsflächen (20) die Spannfläche bilden, wobei die Freiräume (18) durch radiale Schlitze gebildet sind, die in Radialrichtung betrachtet zur Aufnahme (14) hin offen sind und eine wesentliche Tiefe in radialer Richtung aufweisen, und mit einem die Segmente (19) in radialer Richtung gesehen außen umringenden Hülsenteil (30),
**dadurch gekennzeichnet,**
**dass** die Segmente (19) Teil eines in den Hülsenteil (30) des Futterkörpers (12) eingesetzten Einsatzes (40) sind, bei dem alle radialen Schlitze zwischen den Segmenten (19) des Einsatzes (40) zu beiden Radialrichtungen offen sind.

2. Spannfutter nach Anspruch 1,
**dadurch gekennzeichnet,**
**dass** die Schlitze zwischen den Segmenten (19) eine wesentliche Breite in Umgangsrichtung aufweisen.

3. Spannfutter nach Anspruch 1 oder 2,
**dadurch gekennzeichnet,**
**dass** die Segmente (19) im Querschnitt die Form von Kreisringsegmenten aufweisen.

4. Spannfutter nach einem der Ansprüche 1 bis 3,
**dadurch gekennzeichnet,**
**dass** die Segmente (19) im Querschnitt die Form von radial ausgerichteten Quadern aufweisen.

5. Spannfutter nach Anspruch 1,
**dadurch gekennzeichnet,**
**dass** die radialen Schlitze in Radialrichtung gleichbleibend breit bemessen sind.

6. Spannfutter nach Anspruch 1,
**dadurch gekennzeichnet,**
**dass** die radialen Schlitze sich in Radialrichtung von innen nach außen vergrößern.

7. Spannfutter nach einem der Ansprüche 1 bis 6,
**dadurch gekennzeichnet,**
**dass** die Segmente (19) in Umfangsrichtung in etwa gleichen Umfangswinkelabständen aufeinanderfolgen.

8. Spannfutter nach Anspruch 1,
**dadurch gekennzeichnet,**
**dass** der Hülsenteil (30) einen vergleichsweise dünn bemessenen Wandungsquerschnitt aufweist.

9. Spannfutter nach Anspruch 1,
**dadurch gekennzeichnet,**
**dass** der Einsatz (40) aus anderem Material als der Hülsenteil (30) gebildet ist.

10. Spannfutter nach Anspruch 1,
**dadurch gekennzeichnet,**
**dass** der Einsatz (40) mit dem Hülsenteil (30) fest verbunden ist, z. B. durch Löten.

11. Spannfutter nach Anspruch 9 oder 10,
**dadurch gekennzeichnet,**
**dass** der Einsatz (40) aus einem Material mit geringer thermischer Leitfähigkeit gebildet ist.

12. Spannfutter nach einem der Ansprüche 9 bis 11,
**dadurch gekennzeichnet,**
**dass** der Einsatz (40) aus einem Material mit geringem Wärmeausdehnungskoeffizienten gebildet ist.

## Claims

1. Clamping chuck for clamping tools by means of a shrink fit, having a chuck body (12) which has a longitudinal section (13) with a central receptacle (14) with a clamping face for inserting and receiving the tool (11) which is to be clamped with its shank (17), with the longitudinal section (13) having a plurality of segments (19) which are arranged at intervals to one another in the peripheral direction and are separated from one another by means of interposed clearances (18), which segments (19) run substantially axially parallel and, with their inner peripheral faces (20), form the clamping face, with the clearances (18) being formed by radial slots which are open towards the receptacle (14) as viewed in the radial direction and have a significant depth in the radial direction, and having a sleeve part (30) which surrounds the segments (19) at the outside as viewed in the radial direction,
**characterized**
**in that** the segments (19) are part of an insert (40) which is inserted into the sleeve part (30) of the chuck body (12), in which insert (40) all of the radial slots between the segments (19) of the insert (40) are open in both radial directions.

2. Clamping chuck according to Claim 1,
**characterized**
**in that** the slots between the segments (19) have a significant width in the peripheral direction.

3. Clamping chuck according to Claim 1 or 2,
**characterized**
**in that** the segments (19) have the shape of circular ring segments in cross section.

4. Clamping chuck according to one of Claims 1 to 3,
**characterized**
**in that** the segments (19) have the shape of radially aligned cuboids in cross section.

5. Clamping chuck according to Claim 1,
**characterized**
**in that** the radial slots are dimensioned with a constant width in the radial direction.

6. Clamping chuck according to Claim 1,
**characterized**
**in that** the radial slots increase in size from the inside to the outside in the radial direction.

7. Clamping chuck according to one of Claims 1 to 6,
**characterized**
**in that** the segments (19) follow one another in the peripheral direction at approximately equal peripheral angle intervals.

8. Clamping chuck according to Claim 1,
**characterized**
**in that** the sleeve part (30) has a comparatively thinly dimensioned wall cross section.

9. Clamping chuck according to Claim 1,
**characterized**
**in that** the insert (40) is formed from a different material than the sleeve part (30).

10. Clamping chuck according to Claim 1,
**characterized**
**in that** the insert (40) is fixedly connected to the sleeve part (30), for example by means of soldering.

11. Clamping chuck according to Claim 9 or 10,
**characterized**
**in that** the insert (40) is formed from a material with low thermal conductivity.

12. Clamping chuck according to one of Claims 9 to 11,
**characterized**
**in that** the insert (40) is formed from a material with a low coefficient of thermal expansion.

## Revendications

1. Mandrin de serrage destiné à serrer des outils par blocage par retrait, qui présente un corps de mandrin (12) dont un tronçon de longueur (13) présente un logement central (14) et une surface de serrage qui permet d'enficher et de reprendre par sa tige (17) l'outil (11) à serrer, le tronçon de longueur (13) présentant plusieurs segments (19) disposés à distance mutuelle dans le sens de la périphérie et séparés les uns des autres par des espaces intermédiaires libres (18), ces segments s'étendant essentiellement parallèlement à l'axe et formant la surface de serrage par leur surface périphérique intérieure (20), les espaces libres (18) étant formés par des fentes radiales qui sont ouvertes sur le logement (14) dans la direction radiale et qui présentent une grande profondeur dans la direction radiale, et une partie en manchon (30) qui entoure par l'extérieur les segments (19) en direction radiale,
**caractérisé en ce que**
les segments (19) font partie d'une garniture (40) insérée dans la partie en manchon (30) du corps de mandrin (12) et dont toutes les fentes radiales situées entre les segments (19) de la garniture (40) sont ouvertes dans les deux directions radiales.

2. Mandrin de serrage selon la revendication 1, **caractérisé en ce que** les fentes situées entre les segments (19) ont une grande largeur dans la direction périphérique.

3. Mandrin de serrage selon les revendications 1 ou 2, **caractérisé en ce que** les segments (19) ont en coupe transversale la forme de segments d'anneau circulaire.

4. Mandrin de serrage selon l'une quelconque des revendications 1 à 3, **caractérisé en ce que** les segments (19) ont en coupe transversale la forme de parallélépipèdes rectangles orientés radialement.

5. Mandrin de serrage selon la revendication 1, **caractérisé en ce que** les fentes radiales ont une largeur constante dans la direction radiale.

6. Mandrin de serrage selon la revendication 1, **caractérisé en ce que** les fentes radiales s'agrandissent de l'intérieur vers l'extérieur dans la direction radiale.

7. Mandrin de serrage selon l'une quelconque des revendications 1 à 6, **caractérisé en ce que** les segments (19) se succèdent à des écarts angulaires sensiblement constants dans le sens de la périphérie.

8. Mandrin de serrage selon la revendication 1, **caractérisé en ce que** la paroi de la partie en manchon (30) a une section transversale relativement mince.

9. Mandrin de serrage selon la revendication 1, **caractérisé en ce que** la garniture (40) est formée d'un autre matériau que la partie en manchon (30).

10. Mandrin de serrage selon la revendication 1, **caractérisé en ce que** la garniture (40) est reliée solidairement à la partie en manchon (30), par exemple par brasage.

11. Mandrin de serrage selon les revendications 9 ou 10, **caractérisé en ce que** la garniture (40) est formée d'un matériau à basse conductivité thermique.

12. Mandrin de serrage selon l'une quelconque des revendications 9 à 11, **caractérisé en ce que** la garniture (40) est formée d'un matériau à petit coefficient de dilatation thermique.
